# EUROPÄISCHE PATENTSCHRIFT

(11) **EP 3 561 351 B1**
(45) Veröffentlichungstag und Bekanntmachung des Hinweises auf die Patenterteilung: **19.05.2021**
(21) Anmeldenummer: 19169717.6
(22) Anmeldetag: 17.04.2019
(51) Int. Cl.: F16K 31/524, E03C 1/04, F16K 31/60, F16K 35/04, F16K 11/078, F16K 11/00

(54) **MISCH- UND ABSPERRVENTILVORRICHTUNG SOWIE SANITÄRE MISCH- UND ABSPERRARMATUR**
MIXING AND SHUT-OFF VALVE DEVICE AND SANITARY MIXING AND SHUT-OFF VALVE
DISPOSITIF DE SOUPAPE DE MÉLANGE ET D'ARRÊT AINSI QU'ARMATURE SANITAIRE DE MÉLANGE ET D'ARRÊT

(30) Priorität: 25.04.2018 DE 102018206354
(43) Veröffentlichungstag der Anmeldung: 30.10.2019
(73) Patentinhaber: Hansgrohe SE, 77761 Schiltach (DE)
(72) Erfinder: Groß, Jürgen, 77796 Mühlenbach (DE); Meier, Fridolin, 77709 Oberwolfach (DE)
(74) Vertreter: Patentanwälte Ruff, Wilhelm, Beier, Dauster & Partner mbB

(56) Entgegenhaltungen:
- DE-A1- 3 719 410
- DE-A1- 19 753 950
- US-A1- 2007 251 587
- US-B2- 7 213 614
- Anonymous: "Gebrauchsanleitung/Montageanleitung Hansgrohe Metropol Select 100/110/260", Hansgrohe, 1. Juli 2017 (2017-07-01), XP055596487, Schiltach Gefunden im Internet: URL:- [gefunden am 2019-06-14]

## Beschreibung

Die Erfindung bezieht sich auf eine Misch- und Absperrventilvorrichtung nach dem Oberbegriff des Patentanspruchs 1 und auf eine damit ausgerüstete sanitäre Misch- und Absperrarmatur.

Es sind verschiedentlich Misch- und Absperrventilvorrichtungen bekannt, die einen Ventilgehäusekörper, eine Ventileinheit im Ventilgehäusekörper mit einer Absperrsteuerung zur Steuerung einer Fluiddurchflussmenge und einer Mischsteuerung zur Steuerung eines Fluidmischungsverhältnisses, eine Absperrbedieneinrichtung, die als Nutzerschnittstelle zur Betätigung der Absperrsteuerung der Ventileinheit mit der Absperrsteuerung gekoppelt ist und relativ zum Ventilgehäusekörper zwischen einer Absperrstellung und einer Öffnungsstellung bewegbar ist, und eine Mischbedieneinrichtung aufweisen, die als Nutzerschnittstelle zur Betätigung der Mischsteuerung der Ventileinheit mit der Mischsteuerung gekoppelt ist und relativ zum Ventilgehäusekörper zwischen einer ersten Mischendstellung und zweiten Mischendstellung bewegbar ist.

Misch- und Absperrventilvorrichtungen mit diesen Eigenschaften sind aus der Gebrauchs- und Montageanleitung Hansgrohe Metropol Select 100/110/260 bekannt und werden beispielsweise für sanitäre Misch- und Absperrarmaturen wie Waschtischmischern und dgl. eingesetzt. So wird beispielsweise von der Anmelderin eine Misch- und Absperrventilvorrichtung dieser Art für einen Waschtischmischer unter der Artikelnummer 92529000 vertrieben, die einen als Kartusche ausgebildeten, zylindrischen Ventilgehäusekörper und eine darin untergebrachte Ventileinheit und dieser zugeordnet eine Absperrbedieneinrichtung und eine Mischbedieneinrichtung umfasst, wobei die Absperrbedieneinrichtung eine Drucktaste beinhaltet, die in einer Axialrichtung des Ventilgehäusekörpers translationsbeweglich angeordnet ist. Die Mischbedieneinrichtung ist um eine zur Axialrichtung des Ventilgehäusekörpers parallele Mischdrehachse drehbeweglich angeordnet. Durch Drücken der Drucktaste kann die Wasserabgabe der Sanitärarmatur, in welcher die Misch- und Absperrventilvorrichtung eingesetzt ist, abgesperrt oder freigegeben werden, und durch Verdrehen der Mischbedieneinrichtung lässt sich das Mischungsverhältnis von zugeführtem Kaltwasser und zugeführtem Warmwasser und damit die Temperatur des solchermaßen bereitgestellten Mischwassers stufenlos einstellen.

Darüber hinaus sind auch derartige Misch- und Absperrventilvorrichtungen bekannt, die zusätzlich über eine Selbstrückstelleinrichtung verfügen, die eine Rückstellkraft zur selbsttätigen Rückstellung der Mischbedieneinrichtung in die erste Mischendstellung bereitstellt. Eine solche Vorrichtung ist in Form eines Einhebelmischers in der Patentschrift US 7.213.614 B2 offenbart, wobei dort durch Reibungseffekte dafür gesorgt werden soll, dass die Selbstrückstellung nicht erfolgt, wenn sich der Mischerhebel in Öffnungsstellung befindet.

In der Offenlegungsschrift DE 197 53 950 A1 ist eine Misch- und Absperrventilvorrichtung in Form eines Einhebelmischers offenbart, bei dem, wie für diesen Mischertyp üblich, die Absperrsteuerung und die Mischsteuerung eine jeweilige Schwenkbewegung um zueinander senkrechte Schwenkachsen beinhalten. Der dortige Einhebelmischer weist eine Selbstrückstellung in die Kaltwasserposition unter Verwendung einer Spiralfeder und eine Rasteinrichtung auf, welche die Mischbedieneinrichtung rastbeweglich mit dem Ventilgehäusekörper koppelt und einen federbelasteten Raststift als Rastmittel am Mischerhebel sowie einen korrespondierenden Zahnkranz als Gegenrastmittel am Ventilgehäusekörper umfasst, wobei die von der Rasteinrichtung für die Mischbedieneinrichtung bereitstellte Rastkraft in der Öffnungsstellung des Einhebelmischers größer und in der Absperrstellung kleiner als die von der Selbstrückstelleinrichtung für die Mischbedieneinrichtung bereitgestellte Rückstellkraft ist.

Der Erfindung liegt als technisches Problem die Bereitstellung einer Misch- und Absperrventilvorrichtung der eingangs genannten Art, die gegenüber den oben genannten herkömmlichen Misch- und Absperrventilvorrichtungen in ihrer Funktionalität und/oder ihrem konstruktiven Aufbau verbessert ist, sowie einer damit ausgerüsteten sanitären Misch- und Absperrarmatur zugrunde.

Die Erfindung löst dieses Problem durch die Bereitstellung einer Misch- und Absperrventilvorrichtung mit den Merkmalen des Anspruchs 1 sowie einer sanitären Misch- und Absperrarmatur mit den Merkmalen des Anspruchs 5.

Bei der erfindungsgemäßen Misch- und Absperrventilvorrichtung ist die Absperrbedieneinrichtung längs einer zur Mischdrehachse parallelen Absperrbetätigungsrichtung zwischen der Absperrstellung und der Öffnungsstellung translationsbeweglich, d.h. der Benutzer bedient die Absperrsteuerung des Ventils in einer geradlinigen Bewegung, während die Mischbedieneinrichtung zwischen ihren beiden Mischendstellungen um eine zur Absperrbetätigungsrichtung parallele Mischdrehachse drehbeweglich ist. Dies stellt eine hinsichtlich Ventilfunktionalität und Bedienkomfort vorteilhafte Kombination von Absperrbetätigung und Mischbetätigung des Ventils dar.

Die Selbstrückstelleinrichtung stellt eine Rückstellkraft zur selbsttätigen Rückstellung der Mischbedieneinrichtung in die erste Mischendstellung bereit. Die Rasteinrichtung koppelt die Mischbedieneinrichtung rastbeweglich mit dem Ventilkörper und umfasst als Rastmittel und korrespondierendes Gegenrastmittel eine Rastnockeneinheit einerseits und einen Rastzahnkranz andererseits. Eine von der Rasteinrichtung für die Mischbedieneinrichtung bereitgestellte, d.h. auf diese einwirkende, Rastkraft ist, wenn sich die Absperrbedieneinrichtung in der Öffnungsstellung befindet, größer als die von der Selbstrückstelleinrichtung für die Mischbedieneinrichtung bereitgestellte, d.h. auf diese ausgeübte, Rückstellkraft. Hingegen ist die von der Rasteinrichtung für die Mischbedieneinrichtung bereitgestellte Rastkraft, wenn sich die Absperrbedieneinrichtung in der Absperrstellung befindet, kleiner als die von der Selbstrückstelleinrichtung für die Mischbedieneinrichtung bereitgestellte Rückstellkraft.

Die Rastnockeneinheit beinhaltet mindestens einen Rastnocken, der an einem freien Ende eines radial elastisch nachgiebigen, sich parallel zur Mischdrehachse an der Mischbedieneinrichtung erstreckenden Rastarms angeordnet ist. Zusätzlich oder alternativ beinhaltet die Selbstrückstelleinrichtung ein sich am Ventilgehäusekörper abstützendes und ein Rückstelldrehmoment auf die Mischbedieneinrichtung ausübendes Schraubenfederelement, das mit seiner Längsachse in einem Bogen senkrecht zur Mischdrehachse am Ventilgehäusekörper angeordnet ist. Dies stellt insbesondere in Kombination mit der drehbeweglichen Ausführung der Mischbedieneinrichtung eine konstruktiv vorteilhafte Ausführung der Rasteinrichtung bzw. der Selbstrückstelleinrichtung dar. Der jeweilige Rastzahnkranz kann sich je nach Bedarf über einen Winkelbereich von 360° oder als Kreisbogenabschnitt über einen geringeren Winkelbereich erstrecken.

Mit diesen Merkmalen bietet die Misch- und Absperrventilvorrichtung der Erfindung Vorteile z.B. hinsichtlich Funktionalität und/oder konstruktivem Aufbau. So wird einerseits durch die spezifische Ausführung der Selbstrückstelleinrichtung und der Rasteinrichtung ermöglicht, dass sich die Mischbedieneinrichtung selbsttätig, d.h. ohne Nutzerbetätigung, in ihre erste Mischendstellung rückstellen kann, wenn sie sich nicht schon dort befindet und wenn sich die Absperrbedieneinrichtung in ihrer Absperrstellung befindet. Denn in dieser Situation ist die von der Rasteinrichtung auf die Mischbedieneinrichtung wirkende Rastkraft kleiner als die von der Selbstrückstelleinrichtung auf die Mischbedieneinrichtung ausgeübte Rückstellkraft, was auch den Fall einschließen kann, dass die Rastkraft in der Absperrstellung der Absperrbedieneinrichtung null ist, d.h. die Rasteinrichtung inaktiv ist. Folglich gelangt das Ventil, wenn es vom Benutzer in die Absperrstellung gebracht worden ist, selbsttätig in die definierte erste Mischendstellung, z.B. eine Kaltwasserstellung bei einer sanitären Misch- und Absperrarmatur. Dadurch wird im genannten Beispielfall zuverlässig vermieden, dass unerwünschterweise zu heißes Wasser abgegeben wird, wenn der Benutzer aus dieser Ruhe-/Ausgangsposition des Ventils heraus durch Betätigen der Absperrbedieneinrichtung das Ventil öffnet, ohne hierbei gleichzeitig die Mischbedieneinrichtung zu betätigen.

Andererseits stellt die Rasteinrichtung dem Benutzer eine vorteilhafte Haptik für die Betätigung der Mischbedieneinrichtung zur Verfügung, wenn sich die Absperrbedieneinrichtung in der Öffnungsstellung befindet. Dabei sind die Rasteinrichtung und die Selbstrückstelleinrichtung vorteilhaft so aufeinander abgestimmt, dass dann, wenn sich die Absperrbedieneinrichtung in der Öffnungsstellung befindet, für die Mischbedieneinrichtung die Rastkraft der Rasteinrichtung größer ist als die Rückstellkraft der Selbstrückstelleinrichtung. Auf diese Weise sorgt die Rasteinrichtung dafür, dass bei geöffnetem Ventil die Mischbedieneinrichtung ihre jeweils aktuelle, vom Benutzer eingestellte Position beibehält und nicht von der Selbstrückstelleinrichtung in die erste Mischendstellung zurückgestellt wird, wenn der Benutzer die Mischbedieneinrichtung nach Betätigung wieder loslässt.

In einer Weiterbildung der Erfindung ist die Absperrsteuerung der Ventileinheit eine bistabil schaltbare Auf/Zu-Steuerung, und die Absperrbedieneinrichtung beinhaltet eine Drucktaste, die zwischen einer die Absperrstellung bildenden ersten Tastenendposition und einer die Öffnungsstellung bildenden zweiten Tastenendposition längs der Absperrbetätigungsrichtung axialbeweglich ist. Die beiden Tastenendpositionen sind dementsprechend axial gegeneinander versetzt. In entsprechenden Ausführungen kann dazu die Drucktaste z.B. durch ein entsprechendes Vorspannmittel, insbesondere ein elastisches Element wie eine Feder oder dergleichen, in Richtung einer der beiden Tastenendpositionen, die durch einen zugehörigen Endanschlag definiert ist, vorgespannt angeordnet sein, während die Drucktaste in der anderen Tastenendposition über eine vom Benutzer ausrastbare Rastung gegen die Kraft der Vorspannmittel gehalten wird.

In einer Weiterbildung der Erfindung beinhaltet die Mischbedieneinrichtung ein Drehbetätigungselement, das mit der Absperrbedieneinrichtung translationsbewegungsgekoppelt ist, d.h. die Absperrbedieneinrichtung nimmt das Drehbetätigungselement in seiner Translationsbewegung mit. Das Drehbetätigungselement weist ein Drehhülsenteil auf, an dem mehrere Rastarme der Rastnockeneinheit mit jeweiligem Rastnocken in Umfangsrichtung verteilt angeordnet sind. Das Drehbetätigungselement beinhaltet auf diese Weise das Rastmittel, das dementsprechend ebenfalls mit der Translationsbewegung der Absperrbedieneinrichtung in der betreffenden Translationsrichtung mitbewegt wird. Dies kann dazu genutzt werden, das Rastmittel je nach Stellung der Absperrbedieneinrichtung mit dem Gegenrastmittel aktiv in Eingriff zu bringen oder es aus dem Eingriff mit dem Gegenrastmittel herauszuführen. Dadurch kann die von der Rasteinrichtung für die Mischbedieneinrichtung bereitgestellte Rastkraft in ihrer Größe abhängig davon verändert werden, ob sich die Absperrbedieneinrichtung in der Öffnungsstellung oder in der Absperrstellung befindet. So kann in diesem Fall dafür gesorgt werden, dass die Rastkraft für die Mischbedieneinrichtung wie gefordert je nach Stellung der Absperrbedieneinrichtung größer oder kleiner als die von der Selbstrückstelleinrichtung bereitgestellte Rückstellkraft ist.

In einer konstruktiv vorteilhaften Weiterbildung der Erfindung ist der Ventilgehäusekörper zylindrisch, die Absperrbetätigungsrichtung ist parallel zu einer axialen Längsachse des zylindrischen Ventilgehäusekörpers, eine axiale Längsmittenachse des zylindrischen Ventilgehäusekörpers bildet die Mischdrehachse, und die Absperrbedieneinrichtung sowie die Mischbedieneinrichtung sind an einer Stirnseite des zylindrischen Ventilgehäusekörpers angeordnet. Diese Systemausführung eignet sich z.B. gut für entsprechende sanitäre Misch- und Absperrarmaturen, wie Waschtischmischer und dergleichen.

Die erfindungsgemäße sanitäre Misch- und Absperrarmatur besitzt zwei getrennte Wassereinlässe, einen Wasserauslass und eine Wasserführung von den Wassereinlässen einerseits zum Wasserauslass andererseits. In dieser Wasserführung befindet sich zwischen den Wassereinlässen einerseits und dem Wasserauslass andererseits die erfindungsgemäße Misch- und Absperrventilvorrichtung. Durch die Mischsteuerung der Misch- und Absperrventilvorrichtung kann der Benutzer das Mischungsverhältnis der über die Wassereinlässe getrennt zugeführten Wasserströme, z.B. Kaltwasser und Warmwasser, in gewünschter Weise steuern bzw. regulieren. Durch die Absperrsteuerung der Misch- und Absperrventilvorrichtung kann der Benutzer wahlweise das Austreten von Mischwasser aus dem Wasserauslass freigeben oder unterbinden. Wenn der Benutzer das Ventil absperrt bzw. schließt, gelangt es selbsttätig in die erste Mischendstellung der Misch- und Absperrventilvorrichtung zurück, z.B. in ihre Kaltwasserstellung.

Vorteilhafte Ausführungsformen der Erfindung sind in den Zeichnungen dargestellt und werden nachfolgend beschrieben. Hierbei zeigen:
- Fig. 1: eine teilweise Längsschnittansicht einer sanitären Misch- und Absperrarmatur mit einem Bedienteil in einem Absperrzustand,
- Fig. 2: eine perspektivische Explosionsansicht der Armatur von Fig. 1,
- Fig. 3: eine perspektivische Explosionsansicht einer z.B. in der Armatur der Fig. 1 und 2 verwendbaren Misch- und Absperrventilvorrichtung ohne Bedienteil,
- Fig. 4: eine Detailansicht von Fig. 1 in einem Bedienbereich,
- Fig. 5: eine Detailansicht eines Bereichs V von Fig. 4,
- Fig. 6: eine Perspektivansicht der Misch- und Absperrventilvorrichtung ohne Bedienteil im zusammengebauten Zustand in einer ersten Mischendposition einer Ventileinheit,
- Fig. 7: eine Detailansicht eines Bereichs VII von Fig. 6,

- Fig. 8: eine Detailansicht eines Bereichs VIII von Fig. 6,
- Fig. 9: die Ansicht von Fig. 4 in einem durchgedrückten Zustand des Bedienteils,
- Fig. 10: die Ansicht von Fig. 4 in einem Öffnungszustand des Bedienteils,
- Fig. 11: eine Detailansicht eines Bereichs XI von Fig. 10,
- Fig. 12: eine Schnittansicht längs einer Linie XII-XII von Fig. 10,
- Fig. 13: eine Detailansicht eines Bereichs XIII von Fig. 12,
- Fig. 14: die Ansicht von Fig. 6 in einer Mischzwischenstellung der Ventileinheit und
- Fig. 15: die Ansicht von Fig. 6 in einer zweiten Mischendposition der Ventileinheit.

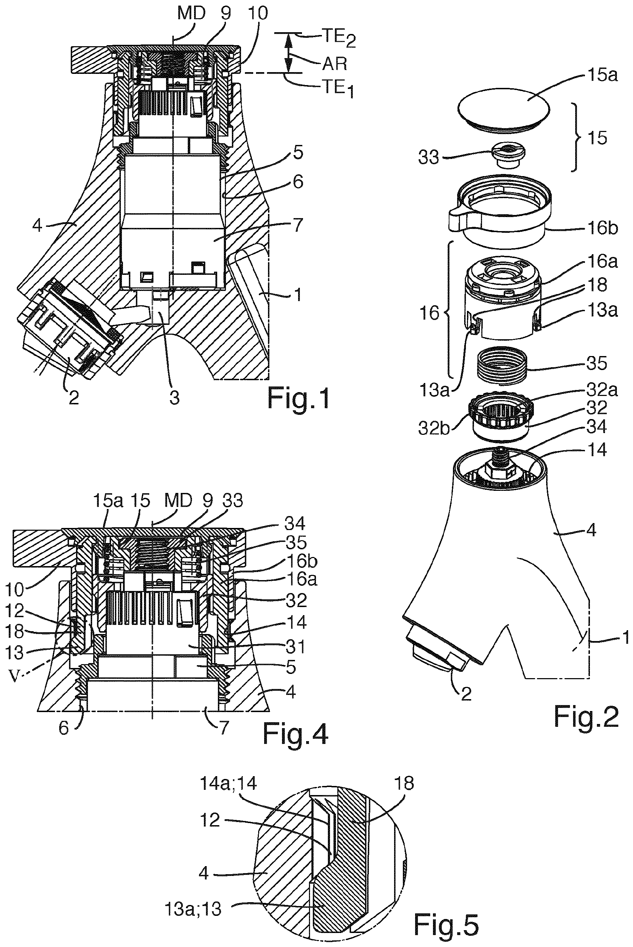

Die in Fig. 1 lediglich mit ihrem hier interessierenden Teil gezeigte sanitäre Misch- und Absperrarmatur weist zwei getrennte Wassereinlässe 1, von denen im Schnitt der Fig. 1 nur einer zu erkennen ist, einen Wasserauslass 2 und eine Wasserführung 3 von den Wassereinlässen 1 einerseits zum Wasserauslass 2 andererseits auf. Diese Komponenten sind in einem Armaturenkörper 4 ausgebildet. In der Wasserführung 3 befindet sich zwischen den Wassereinlässen 1 einerseits und dem Wasserauslass 2 andererseits eine Misch- und Absperrventilvorrichtung 5. Diese ist z.B. in eine Bohrung 6 im Armaturengehäusekörper 4 eingesetzt.

Die Misch- und Absperrventilvorrichtung 5 umfasst, wie zusätzlich aus den Fig. 2 bis 6 ersichtlich, einen Ventilgehäusekörper 7 und eine im Ventilgehäusekörper 7 angeordnete Ventileinheit 8 mit einer Absperrsteuerung zur Steuerung einer Fluiddurchflussmenge und einer Mischsteuerung zur Steuerung eines Fluidmischungsverhältnisses. Weiter beinhaltet die Misch- und Absperrventilvorrichtung eine Absperrbedieneinrichtung 9 und eine Mischbedieneinrichtung 10. Die Absperrbedieneinrichtung 9 ist als Nutzerschnittstelle zur Betätigung der Absperrsteuerung der Ventileinheit 8 mit der Absperrsteuerung gekoppelt und relativ zum Ventilgehäusekörper 7 zwischen einer Absperrstellung und einer Öffnungsstellung bewegbar. Die Mischbedieneinrichtung 10 fungiert als Nutzerschnittstelle zur Betätigung der Mischsteuerung der Ventileinheit 8 und ist dazu mit der Mischsteuerung gekoppelt und relativ zum Ventilgehäusekörper 7 zwischen einer ersten Mischendstellung und einer zweiten Mischendstellung um eine Mischdrehachse MD drehbeweglich.

Weiter weist die Misch- und Absperrventilvorrichtung eine Selbstrückstelleinrichtung 11 und eine Rasteinrichtung 12 auf. Die Selbstrückstelleinrichtung 11 stellt eine Rückstellkraft zur selbsttätigen Rückstellung der Mischbedieneinrichtung 10 in die erste Mischendstellung bereit. Die Rasteinrichtung 12 koppelt die Mischbedieneinrichtung 10 rastbeweglich mit dem Ventilgehäusekörper 7 und weist ein Rastmittel 13 an der Mischbedieneinrichtung 10 sowie ein zu dem Rastmittel 13 korrespondierendes Gegenrastmittel 14 am Ventilgehäusekörper 7 auf. Die Rasteinrichtung 12 und die Selbstrückstelleinrichtung 11 sind dergestalt ausgeführt, dass eine von der Rasteinrichtung 12 für die Mischbedieneinrichtung 10 bereitgestellte Rastkraft in der Öffnungsstellung der Absperrbedieneinrichtung 9 größer und in der Absperrstellung der Absperrbedieneinheit 9 kleiner ist als die von der Selbstrückstelleinrichtung 11 für die Mischbedieneinrichtung 10 bereitgestellte Rückstellkraft.

Die dergestalt realisierte Misch- und Absperrventilvorrichtung 5 ermöglicht eine selbsttätige Rückstellung der Mischbedieneinrichtung 10, wenn der Benutzer die Mischbedieneinrichtung 10 loslässt und sich die Absperrbedieneinrichtung 9 in der Absperrstellung befindet. Denn in diesem Fall übersteigt die Rückstellkraft der Selbstrückstelleinrichtung 11 auf die Mischbedieneinrichtung 10 die Rastkraft der Rasteinrichtung 12, die hierzu null sein kann oder einen beliebigen anderen Wert kleiner als die Rückstellkraft haben kann. Solange sich hingegen die Absperrbedieneinrichtung 9 in der Öffnungsstellung befindet, bleibt die Rastkraft für die Mischbedieneinrichtung 10 größer als die Rückstellkraft, wodurch die Mischbedieneinrichtung 10 ihre vom Benutzer eingestellte Position auch dann beibehält, wenn der Benutzer die Mischbedieneinrichtung 10 loslässt. Zum Verstellen der Mischbedieneinrichtung 10, d.h. zur Aktivierung der Mischsteuerung der Ventileinheit 8, kann der Benutzer die Rastkraft überwinden, wobei ihm die Rasteinrichtung 12 eine vorteilhafte Haptik als fühlbare Rückmeldung über die Betätigung der Mischbedieneinrichtung 10 zur Verfügung stellt.

Für den Ventilgehäusekörper 7 und die Ventileinheit 8 sind beliebige herkömmliche Ausführungen verwendbar, wie sie dem Fachmann bekannt sind, was daher hier keiner näheren Erläuterungen bedarf. Soweit in den Darstellungen spezifische Bauformen gezeigt sind, sind diese folglich nur stellvertretend für weitere aus dem Stand der Technik bekannte Realisierungen zu verstehen. Gleiches gilt für die Absperrbedieneinrichtung 9 und die Mischbedieneinrichtung 10. So sind entsprechende Absperrbedieneinrichtungen und Mischbedieneinrichtungen z.B. in marktgängigen Misch- und Absperrventilvorrichtungen der Anmelderin in unterschiedlichen Bauarten verwendet.

Die Absperrbedieneinrichtung 9 ist zwischen der Absperrstellung und der Öffnungsstellung längs einer Absperrbetätigungsrichtung AR translationsbeweglich, und die Mischdrehachse MD, um welche die Mischbedieneinrichtung 10 zwischen den beiden Mischendstellungen drehbeweglich ist, ist in entsprechenden Ausführungen zur Absperrbetätigungsrichtung AR parallel. In alternativen Ausführungsformen sind andere Bewegungszuordnungen realisiert, z.B. eine zur Mischdrehachse MD der Mischbedieneinrichtung 10 nicht-parallele Translationsbewegung für die Absperrbedieneinrichtung 9.

In entsprechenden Ausführungsformen ist die Absperrsteuerung der Ventileinheit 8 eine bistabil schaltbare Auf/Zu-Steuerung, und die Absperrbedieneinrichtung 9 beinhaltet eine Drucktaste 15, die zwischen einer die Absperrstellung bildenden ersten Tastenendposition TE₁ und einer die Öffnungsstellung bildenden zweiten Tastenendposition TE₂ längs der Absperrbetätigungsrichtung AR axialbeweglich ist. Entsprechend sind die beiden Tastenendpositionen TE₁ TE₂ axial gegeneinander versetzt. In alternativen Ausführungen ist die Absperrsteuerung der Ventileinheit 8 eine mehrstufige oder stufenlose Mengen- bzw. Durchflusssteuerung und/oder die Absperrbedieneinrichtung 9 beinhaltet ein anderes Bedienelement anstelle einer Drucktaste, z.B. ein Schieberelement oder dergleichen, wie dies dem Fachmann geläufig ist.

Das Rastmittel 13 und das Gegenrastmittel 14 umfassen eine Rastnockeneinheit 13a einerseits und einen Rastzahnkranz 14a andererseits. Der Rastzahnkranz 14a erstreckt sich im gezeigten Beispiel über den gesamten Winkelbereich von 360°, was fertigungstechnische Vorteile haben kann. In alternativen Ausführungen erstreckt er sich nur über einen begrenzten Winkelbereich kleiner als 360°.

In entsprechenden Ausführungen weist die Rastnockeneinheit 13a einen oder mehrere Rastnocken in beliebiger Anzahl auf, z.B. wie gezeigt drei im 120°-Winkelabstand voneinander angeordnete Rastnocken. Der jeweilige Rastnocken ist an einem freien Ende eines radial elastisch nachgiebigen, sich parallel zur Mischdrehachse MD an der Mischbedieneinrichtung 10 erstreckenden Rastarms 18 angeordnet bzw. ausgebildet. Das Anordnen mehrerer Rastnocken an entsprechend mehreren Rastarmen 18, vorzugsweise in einer in Umfangsrichtung äquidistanten Verteilung, kann funktionell von Vorteil sein, da dies eine vergleichsweise gleichmäßige Rastführung der Mischbedieneinrichtung 10 am Ventilgehäusekörper 7 ermöglicht.

In entsprechenden Ausführungsformen beinhaltet die Mischbedieneinrichtung 10 ein Drehbetätigungselement 16, das mit der Absperrbedieneinrichtung 9 hinsichtlich deren Translationsbewegung in der Absperrbetätigungsrichtung AR gekoppelt ist und das Rastmittel 13 aufweist. Das Drehbetätigungselement 16 umfasst ein Drehhülsenteil 16a, an dem mehrere Rastarme 18 der Rastnockeneinheit 13a mit jeweiligem Rastnocken in Umfangsrichtung verteilt angeordnet sind. In alternativen Ausführungen ist das Drehbetätigungselement 16 von der Translationsbewegung der Absperrbedieneinrichtung 9 entkoppelt und/oder weist nicht das Rastmittel 13 auf. Im gezeigten Beispiel weist das Drehbetätigungselement 16 zudem einen drehfest mit dem Drehhülsenteil 16a gekoppelten Drehring 16b als Handhabe der Mischbedieneinrichtung 10 auf.

In entsprechenden Ausführungsformen weist die Selbstrückstelleinrichtung 11 ein Schraubenfederelement 17 auf, das sich am Ventilgehäusekörper 7 abstützt und ein Rückstelldrehmoment auf die Mischbedieneinrichtung 10 ausübt. Das Schraubenfederelement 17 ist mit seiner Längsachse in einem Bogen senkrecht zur Mischdrehachse MD am Ventilgehäusekörper 7 angeordnet, wobei es mit einem Ende an einem mit der Mischbedieneinrichtung 10 drehfest gekoppelten Haltezapfen 19 und am anderen Ende an einem feststehenden Haltezapfen 20 des Ventilgehäusekörpers 7 gehalten ist.

In entsprechenden Ausführungsformen ist der Ventilgehäusekörper 7 der Misch- und Absperrventilvorrichtung 5 zylindrisch, die Absperrbetätigungsrichtung AR ist parallel zu einer Längsmittenachse L des zylindrischen Ventilgehäusekörpers, die Längsmittenachse L des zylindrischen Ventilgehäusekörpers bildet die Mischdrehachse MD, und die Absperrbedieneinrichtung 9 und die Mischbedieneinrichtung 10 sind an einer Stirnseite des zylindrischen Ventilgehäusekörpers angeordnet. In alternativen Ausführungen besitzt der Ventilgehäusekörper eine nicht-zylindrische Form, z.B. eine Kugel- oder Quaderform, und/oder die Absperrbetätigungsrichtung AR ist nicht-parallel, z.B. schräg oder senkrecht, zu einer Längsachse des Ventilgehäusekörpers 7, und/oder die Mischdrehachse MD fällt nicht mit einer Längsmittenachse des Ventilgehäusekörpers 7 zusammen, und/oder die Absperrbedieneinrichtung 9 und/oder die Mischbedieneinrichtung 10 sind nicht an einer Stirnseite des Ventilgehäusekörpers 7 angeordnet, sondern z.B. an einer Quer- oder Umfangsseite desselben.

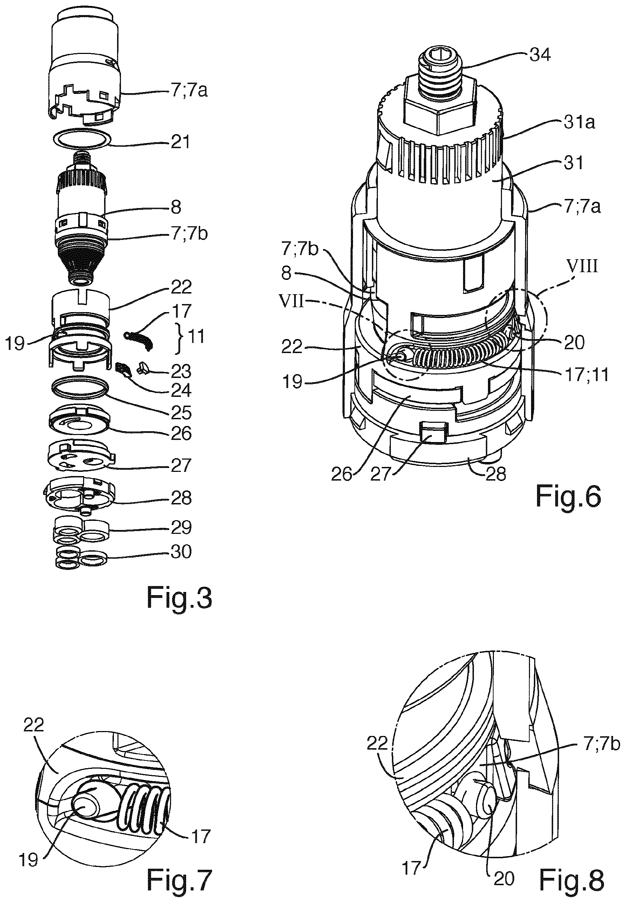

Die in Fig. 3 mit ihren einzelnen Bauteilen gezeigte, exemplarische Realisierung für den Ventilgehäusekörper 7 und die Ventileinheit 8 ist von einer herkömmlichen Art, wie sie in entsprechenden marktgängigen Produkten der Anmelderin zu finden sind. Beispielhaft umfasst dies eine Gehäusehülse 7a und eine Kartuscheneinheit 7b, ergänzt durch einen Gleitring 21, eine Verteilerhülse 22 mit einem Raststück 23 und einem Gleitstück 24, einen Dichtring 25, eine Steuerscheibe 26, eine Verteilerscheibe 27, einen Boden 28, eine Verteilerdichtung 29 und zugehörige Stützringe 30. Die Verteilerhülse 22 ist drehfest mit einem gegenüber dem feststehenden Ventilgehäusekörper 7 an diesem drehbeweglich angeordneten Drehhülsenteil 31 gekoppelt und bildet eine Verlängerung der Mischbedieneinrichtung 10 bzw. einen Teil derselben. Dazu ist das Drehhülsenteil 31 über ein hülsenförmiges Drehkopplungselement 32 drehfest mit dem Drehbetätigungselement 16 gekoppelt. Das Drehkopplungselement 32 weist zu diesem Zweck einen Innenzahnkranz 32a auf, mit dem es auf einen Außenzahnkranz 31a des Drehhülsenteils 31 drehfest aufgesteckt werden kann. Das Drehkopplungselement 32 ist andererseits über einen Außenzahnkranz 32b und einen Innenzahnkranz des Drehhülsenteils 16a drehfest mit dem Drehbetätigungselement 16 gekoppelt.

Die Absperrbedieneinrichtung 9 ist mit ihrer Drucktaste 15 mittels einer Schraube 33 an einem Axialbetätigungszapfen 34 fixiert, der in der Absperrbetätigungsrichtung AR translationsbeweglich am bzw. im Ventilgehäusekörper 7 gehalten ist. Zur Drucktaste 15 gehören im gezeigten Ausführungsbeispiel auch das Drehhülsenteil 16a und der Drehring 16b des Drehbetätigungselements 16 sowie ein auf den Drehring 16b aufclipsbarer Drucktastendeckel 15a. Über eine Schraubendruckfeder 35 stützt sich die Absperrbedieneinrichtung 9 bzw. die Drucktaste 15 elastisch rückstellend axialbeweglich gegen den Ventilgehäusekörper 7 bzw. gegen das axial unbewegliche Drehkopplungselement 32 der Mischbedieneinrichtung 10 ab.

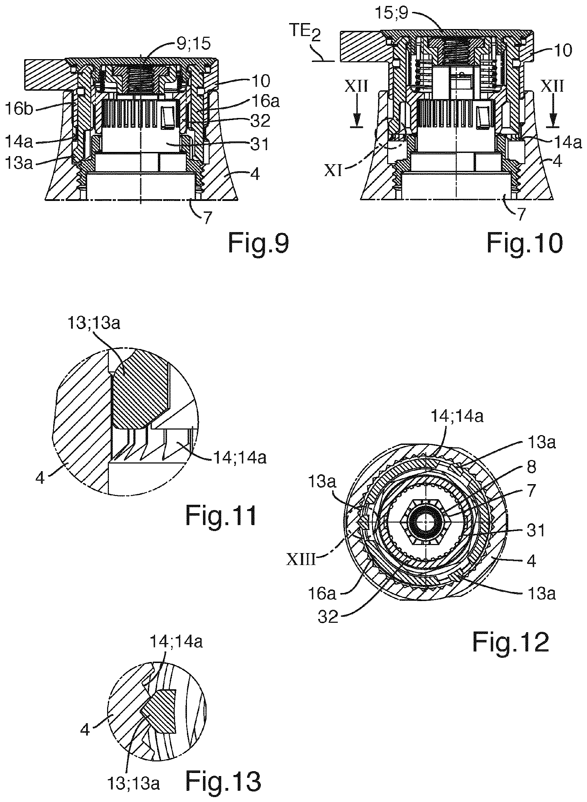

Durch Drücken der Drucktaste 15 wird die Absperrsteuerung der Ventileinheit 8 aktiviert. Die Figuren 1, 4 und 5 zeigen die Vorrichtung in der Absperrstellung, in der sich die Drucktaste 15 in der ersten Tastenendposition TE₂ befindet und in der z.B. kein Wasser aus dem Wasserauslass 2 austritt. Um die Absperrsteuerung umzuschalten, betätigt der Benutzer die Drucktaste 15, die dadurch zunächst in eine vollständig durchgedrückte Lage gemäß Fig. 9 gelangt. Sobald der Benutzer dann die Drucktaste 15 loslässt, wird diese von der Schraubendruckfeder 35 axial in die zweite Tastenendposition TE₂ zurückgedrückt, wie in Fig. 10 gezeigt. In dieser Öffnungsstellung der Absperrsteuerung kann Wasser, das über die Wassereinlässe 1 zugeführt wird, aus dem Wasserauslass 2 austreten. Der axiale Stellungsunterschied zwischen den beiden Tastenendpositionen TE₁ und TE₂ in der Absperr- bzw. in der Öffnungsstellung kann z.B. durch einen entsprechenden herkömmlichen Rastmechanismus in der Lagerung des Axialbetätigungszapfens 34 im Ventilgehäusekörper 7 bereitgestellt sein, was hier keiner näheren Erläuterung bedarf.

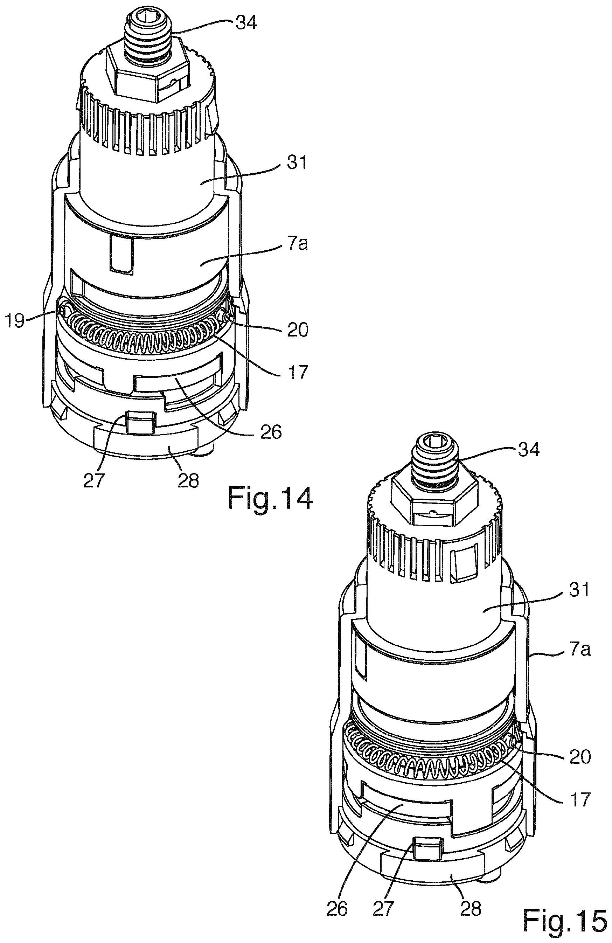

Zur Aktivierung der Mischsteuerung der Ventileinheit 8 kann die Mischbedieneinrichtung 10 zwischen der in Fig. 6 gezeigten ersten Mischendstellung und der in Fig. 15 gezeigten zweiten Mischendposition der Ventileinheit 8 verdreht werden, wobei die Fig. 14 eine Mischzwischenstellung der Ventileinheit 8 zeigt. Beim Verdrehen der Mischbedieneinrichtung 10 von der ersten in Richtung der zweiten Mischendposition wird das als Zugfeder wirkende Schraubenfederelement 17 der Selbstrückstelleinrichtung 11 zunehmend in die Länge gezogen, wodurch das Schraubenfederelement 17 eine entsprechende elastische Rückstellkraft auf die Mischbedieneinrichtung 10 in Richtung der ersten Mischendposition ausübt. Die erste Mischendposition kann beispielsweise einer Kaltwasserstellung und die zweite Mischendposition einer Warm- bzw. Heißwasserstellung entsprechen, in denen dann am Wasserauslass 2 reines Kaltwasser bzw. reines Warm-/Heißwasser austritt. In den Zwischenpositionen wird aus Kaltwasser und Warm-/Heißwasser gemischtes Mischwasser am Wasserauslass 2 bereitgestellt.

Wenn sich die Absperrbedieneinrichtung 9 entsprechend den Fig. 1, 4 und 5 in der Absperrstellung befindet, sind die Rastnockeneinheit 13a und der Rastzahnkranz 14a außer Eingriff, indem die Rastnockeneinheit 13a einerseits und der Rastzahnkranz 14a andererseits axial gegeneinander versetzt bzw. außer Flucht sind. Dementsprechend übt die Rasteinrichtung 12 in dieser Absperrstellung der Absperrbedieneinrichtung 9 keine Rastkraft aus, die der Rückstellkraft entgegenwirkt, mit der das Schraubenfederelement 17 die Mischbedieneinrichtung 10 in der ersten Mischendstellung hält. Folglich ist dafür gesorgt, dass die Misch- und Absperrventilvorrichtung selbsttätig ihre erste Mischendstellung, z.B. der Kaltwasserstellung, erreicht bzw. beibehält, wenn sich die Absperrbedieneinrichtung 9 in der Absperrstellung befindet.

Wenn sich hingegen die Absperrbedieneinrichtung 10 in der Öffnungsstellung gemäß den Fig. 10 bis 13 befindet, sind die Rastnockeneinheit 13a und der Rastzahnkranz 14a in Eingriff, da sich durch die axiale Verlagerung der Absperrbedieneinrichtung 9 und speziell ihrer Drucktaste 15 die daran angekoppelte Rastnockeneinheit 13a axial in den Bereich des Rastzahnkranzes 14a verlagert. Dadurch stellt die Rasteinrichtung 12 nun für die Mischbedieneinrichtung 10 eine Rastkraft bereit, die größer ist als die von der Selbstrückstelleinrichtung 11 mit ihrem Schraubenfederelement 17 für die Mischbedieneinrichtung 10 bereitgestellte Rückstellkraft.

Dies gewährleistet, dass die vom Benutzer in der Öffnungsstellung der Absperrbedieneinrichtung 9 durch Betätigung der Mischbedieneinrichtung 10 jeweils eingestellte Mischstellung trotz der Wirkung der Rückstellkraft des Schraubenfederelements 17 beibehalten wird. Der Benutzer kann folglich die Mischbedieneinrichtung 10 in dieser Situation loslassen, ohne dass sich dadurch die Mischstellung für die Mischsteuerung der Ventileinheit aufgrund der Wirkung der Selbstrückstelleinrichtung 11 ändert. Andererseits kann der Benutzer bei abgestellter Misch- und Absperrventilvorrichtung, d.h. bei in der Absperrstellung befindlicher Absperrbedieneinrichtung 9, zuverlässig davon ausgehen, dass sich die Mischbedieneinrichtung 10 in ihrer ersten Mischendstellung befindet, z.B. der Kaltwasserstellung.

Wie die gezeigten und die weiteren oben erläuterten Ausführungsbeispiele deutlich machen, stellt die Erfindung eine Misch- und Absperrventilvorrichtung zur Verfügung, bei der die Rasteinrichtung dem Benutzer eine vorteilhafte Haptik für die Betätigung der Mischbedieneinrichtung an die Hand gibt, wenn sich die Absperrbedieneinrichtung in der Öffnungsstellung befindet, und bei der die Mischbedieneinrichtung selbsttätig ihre erste Mischendstellung erreicht bzw. beibehält, wenn sich die Absperrbedieneinrichtung in ihrer Schließstellung befindet bzw. wenn der Benutzer die Absperrbedieneinrichtung von der Öffnungsstellung in die Absperrstellung betätigt hat.

Es versteht sich, dass sich die erfindungsgemäße Misch- und Absperrventilvorrichtung sowohl für sanitäre Misch- und Absperrarmaturen als auch für nicht-sanitäre Misch- und Absperrsysteme überall dort eignet, wo Bedarf an einem Ventil besteht, das eine kombinierte Fluidabsperrsteuerung und Fluidmischsteuerung besitzt.

## Patentansprüche

1. Misch- und Absperrventilvorrichtung, insbesondere sanitäre Misch- und Absperrventilvorrichtung, mit
- einem Ventilgehäusekörper (7),
- einer Ventileinheit (8) im Ventilgehäusekörper mit einer Absperrsteuerung zur Steuerung einer Fluiddurchflussmenge und einer Mischsteuerung zur Steuerung eines Fluidmischungsverhältnisses,
- einer Absperrbedieneinrichtung (9), die als Nutzerschnittstelle zur Betätigung der Absperrsteuerung der Ventileinheit mit der Absperrsteuerung gekoppelt ist und relativ zum Ventilgehäusekörper zwischen einer Absperrstellung und einer Öffnungsstellung bewegbar ist,
- einer Mischbedieneinrichtung (10), die als Nutzerschnittstelle zur Betätigung der Mischsteuerung der Ventileinheit mit der Mischsteuerung gekoppelt ist und relativ zum Ventilgehäusekörper zwischen einer ersten Mischendstellung und einer zweiten Mischendstellung um eine Mischdrehachse (MD) drehbeweglich ist, und
- einer Rasteinrichtung (12), welche die Mischbedieneinrichtung rastbeweglich mit dem Ventilgehäusekörper koppelt und ein Rastmittel (13) an der Mischbedieneinrichtung sowie ein zu dem Rastmittel korrespondierendes Gegenrastmittel (14) am Ventilgehäusekörper umfasst,
- wobei das Rastmittel und das Gegenrastmittel eine Rastnockeneinheit (13a) einerseits und einen Rastzahnkranz (14a) andererseits umfassen und
- wobei die Absperrbedieneinrichtung (9) längs einer zur Mischdrehachse (MD) parallelen Absperrbetätigungsrichtung (AR) translationsbeweglich ist,
**dadurch gekennzeichnet, dass**
- eine Selbstrückstelleinrichtung (11) der Misch- und Absperrventilvorrichtung eine Rückstellkraft zur selbsttätigen Rückstellung der Mischbedieneinrichtung in die erste Mischendstellung bereitstellt,
- eine von der Rasteinrichtung für die Mischbedieneinrichtung bereitstellte Rastkraft in der Öffnungsstellung der Absperrbedieneinrichtung größer und in der Absperrstellung der Absperrbedieneinrichtung kleiner als die von der Selbstrückstelleinrichtung für die Mischbedieneinrichtung bereitgestellte Rückstellkraft ist, und
- die Rastnockeneinheit (13a) mindestens einen Rastnocken umfasst, der an einem freien Ende eines radial elastisch nachgiebigen, sich parallel zur Mischdrehachse an der Mischbedieneinrichtung erstreckenden Rastarms (18) angeordnet ist, und/oder die Selbstrückstelleinrichtung (11) ein sich am Ventilgehäusekörper (7) abstützendes und ein Rückstelldrehmoment auf die Mischbedieneinrichtung ausübendes Schraubenfederelement (17) beinhaltet, das mit seiner Längsachse in einem Bogen senkrecht zur Mischdrehachse (MD) am Ventilgehäusekörper (7) angeordnet ist.

2. Misch- und Absperrventilvorrichtung nach Anspruch 1, wobei die Absperrsteuerung der Ventileinheit eine bistabil schaltbare Auf/Zu-Steuerung ist und die Absperrbedieneinrichtung eine Drucktaste (15) beinhaltet, die zwischen einer die Absperrstellung bildenden ersten Tastenendposition (TE₁) und einer die Öffnungsstellung bildenden zweiten Tastenendposition (TE₂) längs der Absperrbetätigungsrichtung axialbeweglich ist, wobei die zweite Tastenendposition axial gegenüber der ersten Tastenendposition versetzt ist.

3. Misch- und Absperrventilvorrichtung nach Anspruch 1 oder 2, wobei die Mischbedieneinrichtung ein Drehbetätigungselement (16) beinhaltet, das mit der Absperrbedieneinrichtung translationsbewegungsgekoppelt ist und ein Drehhülsenteil umfasst, an dem mehrere Rastarme der Rastnockeneinheit mit jeweiligem Rastnocken in Umfangsrichtung verteilt angeordnet sind.

4. Misch- und Absperrventilvorrichtung nach einem der Ansprüche 1 bis 3, wobei
- der Ventilgehäusekörper zylindrisch ist,
- die Absperrbetätigungsrichtung parallel zu einer Längsmittenachse (L) des zylindrischen Ventilgehäusekörpers ist,
- die Längsmittenachse des zylindrischen Ventilgehäusekörpers die Mischdrehachse bildet und
- die Absperrbedieneinrichtung und die Mischbedieneinrichtung an einer Stirnseite des zylindrischen Ventilgehäusekörpers angeordnet sind.

5. Sanitäre Misch- und Absperrarmatur mit
- zwei getrennten Wassereinlässen (1),
- einem Wasserauslass (2),
- einer Wasserführung (3) von den Wassereinlässen einerseits zum Wasserauslass andererseits und
- einer Misch- und Absperrventilvorrichtung (5) nach einem der Ansprüche 1 bis 4 in der Wasserführung zwischen den Wassereinlässen einerseits und dem Wasserauslass andererseits.

## Claims

1. Mixing and shut-off valve device, preferably sanitary mixing and shut-off valve device, comprising
- a valve housing body (7),
- a valve unit (8) in the valve housing body having a shut-off controller for controlling a fluid flow rate, and a mixing controller for controlling a fluid mixing ratio,
- a shut-off operation device (9) coupled to the shut-off controller as a user interface for actuating the shut-off controller of the valve unit and movable relative to the valve housing body between a shut-off position and an open position,
- a mixing operation device (10) coupled to the mixing controller as a user interface for actuating the mixing controller of the valve unit and rotatably movable relative to the valve housing body about a mixing rotational axis (MD) between a first mixing end position and a second mixing end position, and
- a snap device (12) coupling the mixing operation device to the valve housing body in a snap movable manner and comprising a snap means (13) on the mixing operation device and a mating snap means (14) on the valve housing body corresponding to the snap means,
- wherein the snap means and the mating snap means comprise a snap cam unit (13a) on the one hand and a snap sprocket gear (14a) on the other hand, and
- wherein the shut-off operation device (9) is translationally movable along a shut-off actuating direction (AR) parallel to the mixing rotational axis (MD), **characterized in that**
- a self-resetting device (11) of the mixing and shut-off valve device provides a reset force for self-acting reset of the mixing operation device to the first mixing end position,
- a snap force provided by the snap device for the mixing operation device in the open position of the shut-off operation device is greater than and in the shut-off position of the shut-off operation device is smaller than the reset force provided by the self-resetting device for the mixing operation device, and
- the snap cam unit (13a) comprises at least one snap cam which is disposed on a free end of a radially elastically resilient snap arm (18) extending in parallel to the mixing rotational axis on the mixing operation device, and/or the self-resetting device (11) includes a helical spring element (17) supported on the valve housing body (7) and exerting a reset torque on the mixing operation device, where the spring element is disposed on the valve housing body (7) with its longitudinal axis extending along an arch perpendicular to the mixing rotational axis (MD).

2. Mixing and shut-off valve device according to claim 1, wherein the shut-off controller of the valve unit is a bistable switchable On/Off controller and the shut-off operation device includes a push button (15) which is axially movable along the shut-off operation direction between a first button end position (TE₁) forming the shut-off position and a second button end position (TE₂) forming the open position, wherein the second button end position is axially offset in relation to the first button end position.

3. Mixing and shut-off valve device according to claim 1 or 2, wherein the mixing operation device includes a rotating actuation element (16) coupled for translational movement to the shut-off operation device and comprising a rotating sleeve part, on which a plurality of snap arms of the snap cam unit with respective snap cams are arranged distributed in circumferential direction.

4. Mixing and shut-off valve device according to any one of claims 1 to 3, wherein
- the valve housing body is cylindrical,
- the shut-off actuation device is parallel to a longitudinal central axis (L) of the cylindrical valve housing body,
- the longitudinal central axis of the cylindrical valve housing body constitutes the mixing rotational axis, and
- the shut-off operation device and the mixing operation device are arranged on a face end of the cylindrical valve housing body.

5. Sanitary mixing and shut-off valve fitting, comprising
- two separate water inlets (1),
- a water outlet (2),
- a water guidance (3) from the water inlets on the one hand to the water outlet on the other hand, and
- a mixing and shut-off valve device (5) according to any one of claims 1 to 4 in the water guidance between the water inlets on the one hand and the water outlet on the other hand.

## Revendications

1. Dispositif de vanne de mélange et d'arrêt, en particulier dispositif de vanne de mélange et d'arrêt sanitaire, comprenant
- un corps de boîtier de vanne (7),
- une unité de vanne (8) située dans le corps de boîtier de vanne et comprenant une commande d'arrêt destinée à commander un débit de fluide et une commande de mélange destinée à commander un rapport de mélange de fluides,
- un mécanisme de manœuvre d'arrêt (9) qui est accouplé à la commande d'arrêt en tant qu'interface utilisateur pour actionner la commande d'arrêt de l'unité de vanne et qui peut être déplacé par rapport au corps de boîtier de vanne entre une position d'arrêt et une position ouverte,
- un mécanisme de manœuvre de mélange (10) qui est accouplé à la commande de mélange en tant qu'interface utilisateur pour actionner la commande de mélange de l'unité de vanne et qui est mobile en rotation sur un axe de rotation de mélange (MD) par rapport au corps de boîtier de vanne entre une première position d'extrémité de mélange et une deuxième position d'extrémité de mélange, et
- un mécanisme d'encliquetage (12) qui accouple le mécanisme de manœuvre de mélange au corps de boîtier de vanne d'une manière mobile et encliquetable et qui comprend un moyen d'encliquetage (13) au niveau du mécanisme de manœuvre de mélange et un moyen d'encliquetage homologue (14), correspondant au moyen d'encliquetage, au niveau du corps de boîtier de vanne,
- le moyen d'encliquetage et le moyen d'encliquetage homologue comprenant une unité de came d'encliquetage (13a) d'une part et une couronne dentée d'encliquetage (14a) d'autre part, et
- le mécanisme de manœuvre d'arrêt (9) étant mobile en translation le long d'une direction d'actionnement d'arrêt (AR) parallèle à l'axe de rotation de mélange (MD) ,
**caractérisé en ce que**
- un mécanisme de réinitialisation automatique (11) du dispositif de vanne de mélange et d'arrêt fournit une force de réinitialisation pour réinitialiser automatiquement le mécanisme de manœuvre de mélange dans la première position d'extrémité de mélange,
- la force d'encliquetage, fournie par le mécanisme d'encliquetage du mécanisme de manœuvre de mélange, est supérieure dans la position ouverte du mécanisme de manœuvre d'arrêt, et inférieure dans la position d'arrêt du mécanisme de manœuvre d'arrêt, à la force de réinitialisation fournie par le mécanisme de réinitialisation du mécanisme de manœuvre de mélange, et
- l'unité de came d'encliquetage (13a) comprend au moins une came d'encliquetage qui est disposée à une extrémité libre d'un bras d'encliquetage (18) radialement flexible élastiquement et s'étendant parallèlement à l'axe de rotation de mélange au niveau du mécanisme de manœuvre de mélange, et/ou le mécanisme de réinitialisation automatique (11) contient un élément à ressort hélicoïdal (17) qui s'appuie sur le corps de boîtier de vanne (7), qui exerce un couple de réinitialisation sur le mécanisme de manœuvre de mélange et dont l'axe longitudinal est disposé dans un coude perpendiculaire à l'axe de rotation de mélange (MD) au niveau du corps de boîtier de vanne (7).

2. Dispositif de vanne de mélange et d'arrêt selon la revendication 1, la commande d'arrêt de l'unité de vanne étant une commande d'ouverture/fermeture commutable de manière bistable et le mécanisme de manœuvre d'arrêt comprenant un bouton poussoir (15) qui est mobile axialement entre une première position d'extrémité de bouton (TE₁) , formant la position d'arrêt, et une deuxième position d'extrémité de bouton (TE₂), formant la position ouverte, le long de la direction d'actionnement d'arrêt, la deuxième position d'extrémité de bouton étant décalée axialement par rapport à la première position d'extrémité de bouton.

3. Dispositif de vanne de mélange et d'arrêt selon la revendication 1 ou 2, le mécanisme de manœuvre de mélange comprenant un élément d'actionnement rotatif (16) qui est accouplé en translation au mécanisme de manœuvre d'arrêt et qui comprend une partie formant manchon rotatif sur laquelle plusieurs bras d'encliquetage de l'unité de came d'encliquetage, pourvus chacun d'une came d'encliquetage, sont disposés de manière répartie dans la direction circonférentielle.

4. Dispositif de vanne de mélange et d'arrêt selon l'une des revendications 1 à 3,
- le corps de boîtier de vanne étant cylindrique,
- la direction d'actionnement d'arrêt étant parallèle à un axe central longitudinal (L) du corps de boîtier de vanne cylindrique,
- l'axe central longitudinal du corps de boîtier de vanne cylindrique formant l'axe de rotation de mélange et
- le mécanisme de manœuvre d'arrêt et le mécanisme de manœuvre de mélange étant disposés sur un côté frontal du corps de boîtier de vanne cylindrique.

5. Robinetterie de mélange et d'arrêt sanitaire comprenant
- deux entrées d'eau séparées (1),
- une sortie d'eau (2),
- un conduit d'eau (3) allant des entrées d'eau d'une part à la sortie d'eau d'autre part et
- un dispositif de vanne de mélange et d'arrêt (5) selon l'une des revendications 1 à 4 placé dans le conduit d'eau entre les entrées d'eau d'une part et la sortie d'eau d'autre part.
